# DEMANDE DE BREVET EUROPEEN

(11) **EP 0 874 237 A1**
(43) Date de publication de la demande: **28.10.1998**
(21) Numéro de dépôt: 98400828.4
(22) Date de dépôt: 07.04.1998
(51) Int. Cl.: G01N 27/82

(54) **Système et procédé pour détecter des fissures dans des canalisations**

(30) Priorité: 21.04.1997 FR 9704902
(71) Demandeur: SOCIETE DES TRANSPORTS PETROLIERS PAR PIPELINE - TRAPIL, F-75015 Paris (FR)
(72) Inventeur: Ramaut, Edouard, 75116 Paris (FR)
(74) Mandataire: Ballot, Paul Denis Jacques

(57) **Abrégé**

Système pour détecter des fissures dans une canalisation (2), pouvant se déplacer à l'intérieur de cette canalisation, ce système comprenant des moyens pour générer et injecter un flux magnétique dans une portion de la canalisation (2), des moyens (81, 82) pour mesurer des champs magnétiques locaux sur la surface intérieure de la canalisation (2), des moyens pour traiter et stocker ces mesures, et des moyens pour entraîner ce système par le flux de fluide circulant dans cette canalisation (2).

Les moyens de génération de flux et les moyens de mesure sont agencés au sein d'au moins un ensemble de mesure (1) de forme sensiblement cylindrique comprenant des moyens de guidage (5, 6, 71, 73) pour imposer à cet ensemble de mesure (1) une trajectoire sensiblement hélicoïdale à l'intérieur de la canalisation (2).

Utilisation notamment dans l'industrie pétrolière et pétrochimique

## Description

La présente invention concerne un système pour détecter des fissures et des variations d'épaisseur dans des canalisations. Elle vise également un procédé de détection mis en ouvre dans ce système. On considère ici des canalisations de forme cylindrique réalisées dans un alliage ou un matériau comprenant en proportion significative des éléments ferromagnétiques, principalement des canalisations en acier ou en fonte. Les canalisations pétrolières doivent être régulièrement inspectées afin d'y détecter l'apparition de fissures dues pour partie à la corrosion ou la fatigue en vue de prévenir les risques éventuels de rupture. Les fissures naissantes peuvent être de très faible dimension et présenter toutes sortes de formes et d'orientation. Le problème principal de ces inspections réside dans le fait qu'elles sont nécessairement effectuées in situ et par l'intérieur des canalisations dans des portions où celles-ci sont enterrées.

Outre des systèmes de détection à ultrasons et à rayons X, il existe actuellement un système de détection magnétique de fissures dans une canalisation comprenant un module tracteur et un module de détection magnétique. Le module tracteur muni de joints périphériques est entraîné par le flux de liquide circulant dans la canalisation, et peut contenir de l'électronique de traitement, des moyens de stockage d'énergie électrique et des équipements d'enregistrement. Le module de détection magnétique comprend un aimant ou des aimants permanents axiaux et, à chacune de ses extrémités, des brosses en matériau ferromagnétique réalisant un chemin magnétique pour le flux magnétique généré par les aimants permanents qui se referme ainsi à travers une portion de la canalisation. Le module de détection magnétique est pourvu sur sa périphérie d'un ensemble de détecteurs de Hall ou autres fournissant des signaux de mesure représentatifs de l'induction magnétique sur la surface intérieure de la canalisation. Ces signaux de mesure acquis en permanence au cours du déplacement du système de détection à l'intérieur de la canalisation permettent d'obtenir une signature magnétique de cette canalisation.

Ce système de détection, constitué d'un train de modules articulés et pourvu d'un dispositif d'odomètrie, est introduit dans une canalisation à partir d'un point d'entrée appelé gare. La canalisation préalablement purgée pour permettre l'ouverture du circuit et l'introduction du système est ensuite remise en fonctionnement avec circulation du fluide. La détection des joints de soudure situés à des distances prédéterminées associée à la mesure d'odométrie permet de positionner les variations d'épaisseur et fissures détectées.

Ce système permet de détecter des fissures dont l'orientation principale est sensiblement perpendiculaire à l'axe de la canalisation. En revanche, ce système ne permet pas de détecter de fissures orientées presque parallèlement à l'axe de la canalisation et de faible profondeur. En effet la variation de flux balayé causée par ce type de fissure est en général beaucoup trop faible pour être décelée. Le but de la présente invention est de remédier à cet inconvénient en proposant un système de détection capable de détecter des fissures orientées sensiblement selon l'axe d'une canalisation, tout en présentant les caractéristiques d'autonomie des systèmes antérieurs. Cet objectif est atteint avec un système de détection de fissures dans une canalisation, pouvant se déplacer à l'intérieur de cette canalisation, ce système comprenant:
- des moyens pour générer et injecter un flux magnétique dans une portion de la canalisation,
- des moyens pour mesurer des champs magnétiques locaux sur la surface intérieure de la canalisation,
- des moyens pour traiter ces mesures, les stocker et les situer, et
- des moyens pour entraîner ce système par le flux de fluide circulant dans cette canalisation.

Suivant l'invention, les moyens de génération et d'injection de flux magnétique et les moyens de mesure sont agencés au sein d'au moins un ensemble de mesure de forme sensiblement cylindrique comprenant des moyens de guidage pour imposer à cet ensemble de mesure une trajectoire sensiblement hélicoïdale à l'intérieur de la canalisation.

Avec le système de détection de fissure selon l'invention, il devient possible de détecter des anomalies d'épaisseur, des fissures et crevasses longitudinales. Le champ magnétique généré par les aimants et injecté dans la canalisation est désormais orienté transversalement et son déplacement est hélicoïdal. Par ailleurs, les circulations de flux sont désormais localisées sur des secteurs angulaires glissants.

Dans un mode de réalisation préféré d'un système selon l'invention, l'ensemble de mesure comprend une pluralité de circuits magnétiques disposés régulièrement à la périphérie dudit ensemble de mesure et comprenant chacun une culasse en matériau ferromagnétique comprenant deux pôles dirigés vers la surface intérieure de la canalisation et pourvus chacun d'aimants permanents, ces aimants permanents étant agencés de sorte que deux pôles adjacents appartenant à deux circuits magnétiques distincts présentent une même polarité.

L'ensemble de mesure comprend en outre, au titre des moyens de mesure de champ magnétique, des ensembles de détecteurs de Hall ou autres disposés entre les pôles de chaque culasse.

Chaque ensemble de détecteurs est de préférence intégré dans une pièce en matériau isolant disposée à la périphérie de l'ensemble de mesure.

Dans une version préférée de l'invention, les moyens de guidage comprennent des roues libres situées à la périphérie de l'ensemble de mesure et ayant une orientation prédéterminée pour assurer une trajectoire hélicoïdale.

Les roues libres peuvent par exemple être agencées en plusieurs rangées longitudinales disposées dans des logements ménagés sur la périphérie de l'ensemble de mesure. En particulier, des rangées de roues peuvent être situées entre les pôles respectifs de chaque circuit magnétique. Ainsi, dans un exemple pratique de réalisation, chaque rangée de roues est disposée entre un pôle du circuit magnétique et un ensemble de détecteurs. L'ensemble de mesure comprend en outre à chacune de ses extrémités un jeu de roues de guidage d'extrémité agencées pour contribuer à la trajectoire hélicoïdale de l'ensemble de mesure dans les portions sensiblement rectilignes ou à très grand rayon de courbure des canalisations.

Un système de détection selon l'invention est en pratique constitué d'une suite de plusieurs ensembles reliés entre eux par des moyens de liaison, notamment au moins un ensemble d'entraînement contenant les moyens de traitement et d'enregistrement et au moins un ensemble de mesure. Il comprend en outre un ensemble de contact tournant disposé entre le(s) ensemble(s) de mesure et le(s) ensemble(s) d'entraînement.

Ce système comprend au moins deux ensembles de mesure successifs de façon à balayer en recouvrement l'intégralité de la surface intérieure de la canalisation.

Suivant un autre aspect de l'invention, il est proposé un procédé pour détecter des fissures dans une canalisation, mis en ouvre dans un système selon l'invention, comprenant:
- une génération locale de flux magnétique le long de la canalisation,
- des mesures de champs magnétiques locaux sur la surface intérieure de la canalisation,
- un traitement de ces mesures en vue de les stocker et les situer,
- un entraînement de ce système par le flux de fluide circulant dans cette canalisation,
caractérisé en ce que la génération locale de flux magnétique et les mesures de champ magnétique sont effectuées sur des trajectoires hélicoïdales sur la surface intérieure de la canalisation.

On peut bien sûr prévoir une combinaison d'un système de détection de fissures transversales selon l'art antérieur et d'un système de détection selon l'invention.

D'autres particularités et avantages de l'invention apparaîtront encore dans la description ci-après. Aux dessins annexés donnés à titre d'exemples non limitatifs:
- la figure 1 est une vue de dessus d'un ensemble de mesure mis en ouvre dans l'invention;
- la figure 2 est une vue en coupe partielle de l'ensemble de mesure de la figure 1;
- la figure 3 illustre la structure interne de cet ensemble de mesure;
- la figure 4 illustre un détail de réalisation d'une rangée de roues dans un ensemble de mesure;
- la figure 5 représente un exemple de mise en oeuvre d'un système de détection selon l'invention, dans une portion droite d'une canalisation; et
- la figure 6 représente une situation caractéristique d'un système de détection dans une portion courbe d'une canalisation.

On va maintenant décrire un exemple de réalisation d'un ensemble de mesure et d'un système de détection incluant cet ensemble de mesure, en même temps que le procédé de détection de mesure mis en ouvre dans ce système, en référence aux figures précitées.

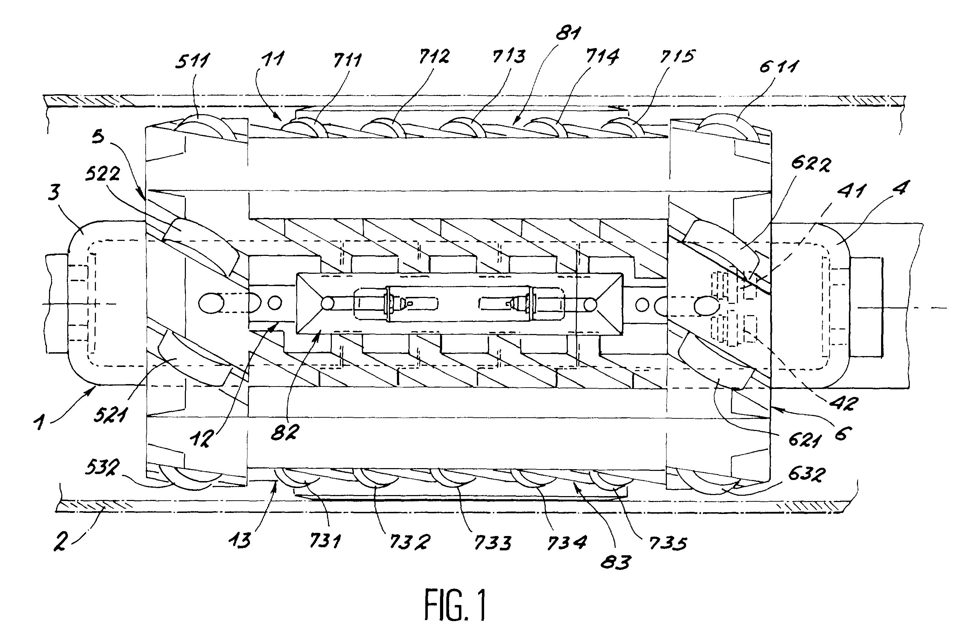

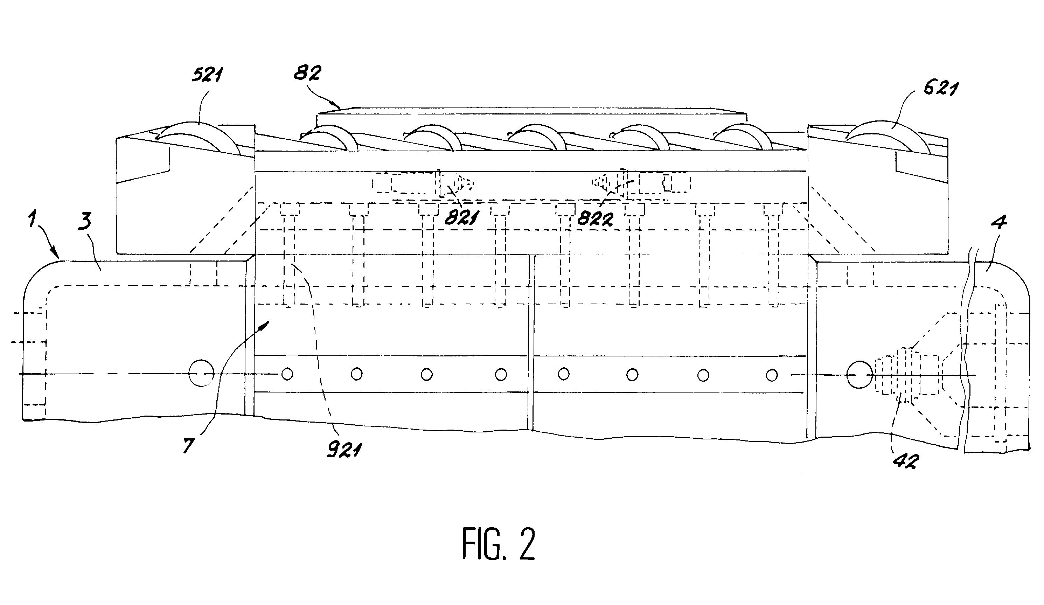

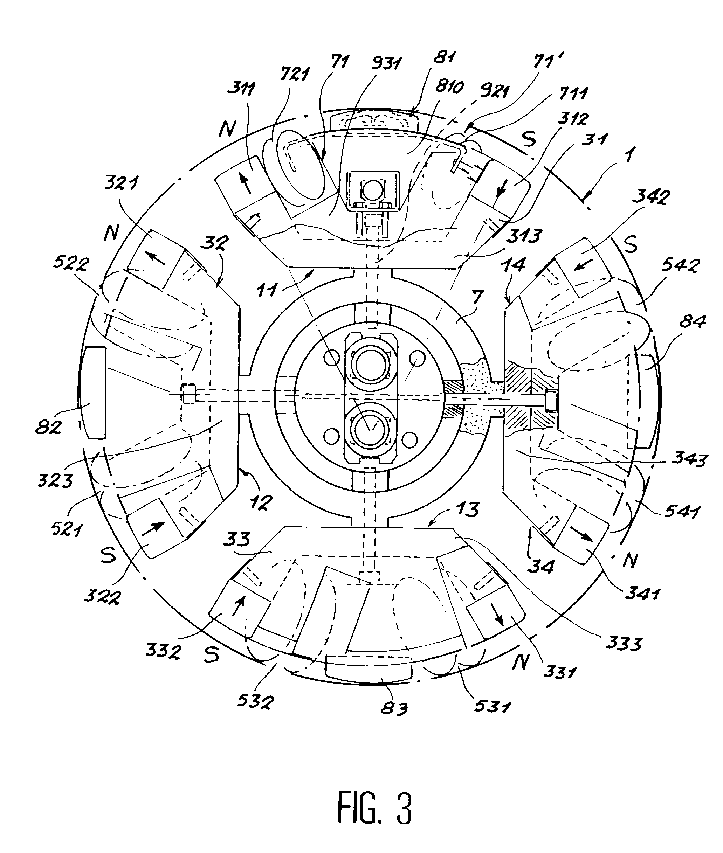

L'ensemble de mesure 1 représenté sur les figures 1 à 4, comprend une structure centrale 7 sur laquelle quatre modules de mesure 11, 12, 13 et 14 sont fixés et espacés angulairement de 90 degrés, et deux modules d'extrémité 5, 6. Chaque module de mesure 11-14 comprend une culasse 31, 32, 33, 34 en matériau ferromagnétique en forme de C ou de U et comportant deux pôles dirigés vers l'extérieur de l'ensemble de mesure et donc vers l'intérieur de la canalisation 2 dans laquelle le système de détection selon l'invention opère. Les deux pôles de chaque culasse 31-34 sont pourvus, pour l'un, d'un aimant permanent produisant un flux magnétique dirigé vers l'extérieur (pôle Nord) 311, 321, 331, 341 et, pour l'autre, d'un aimant permanent produisant un flux magnétique dirigé vers l'intérieur (pôle Sud) 312, 322, 332, 342. Les aimants permanents sont disposés sur la surface extérieure de l'ensemble de mesure de telle sorte que deux aimants permanents adjacents appartenant à deux culasses distinctes adjacentes aient une même polarité afin d'éviter tout effet de fuite et de couplage entre culasses voisines.

Chaque module de mesure 11-14 comprend en outre une pièce de guidage 931 en matériau amagnétique agencée pour recevoir deux rangées 71, 71' de roues de guidage 711-715, 731-735, 711 orientées de telle sorte que leur rotation le long de la paroi intérieure de la canalisation conduise à une trajectoire hélicoïdale de l'ensemble de mesure 2. Chaque module de mesure 11-14 est fixé à la structure centrale 7 par un ensemble de vis 921.

Chaque module d'extrémité 5, 6 comprend quatre groupes de roues de guidage 511, 521, 522; 531, 532; 541, 542; 611, 621, 622, 632, ces roues présentant un diamètre sensiblement supérieur à celui des roues de guidage disposées dans les rangées de roues disposées dans les modules de mesure. Chaque module de mesure 11-14 est en outre pourvu d'un ensemble de détecteurs de Hall ou autres types de détecteurs inclus dans une barre de détection 81-84 disposée longitudinalement à la périphérie de l'ensemble de mesure 2 pour être à proximité immédiate ou même au contact de la surface intérieure de la canalisation 2. Chaque barre de détection 81 est fixée à une pièce de support 810 en matériau amagnétique elle-même fixée à la pièce de guidage 931. Les détecteurs de Hall sont reliés à l'électronique de mesure et aux équipements de stockage situés dans un ensemble d'entraînement via des connecteurs 821, 822 prévus au sein de l'ensemble de mesure 1 et des câbles et connecteurs de liaison (non représentés).

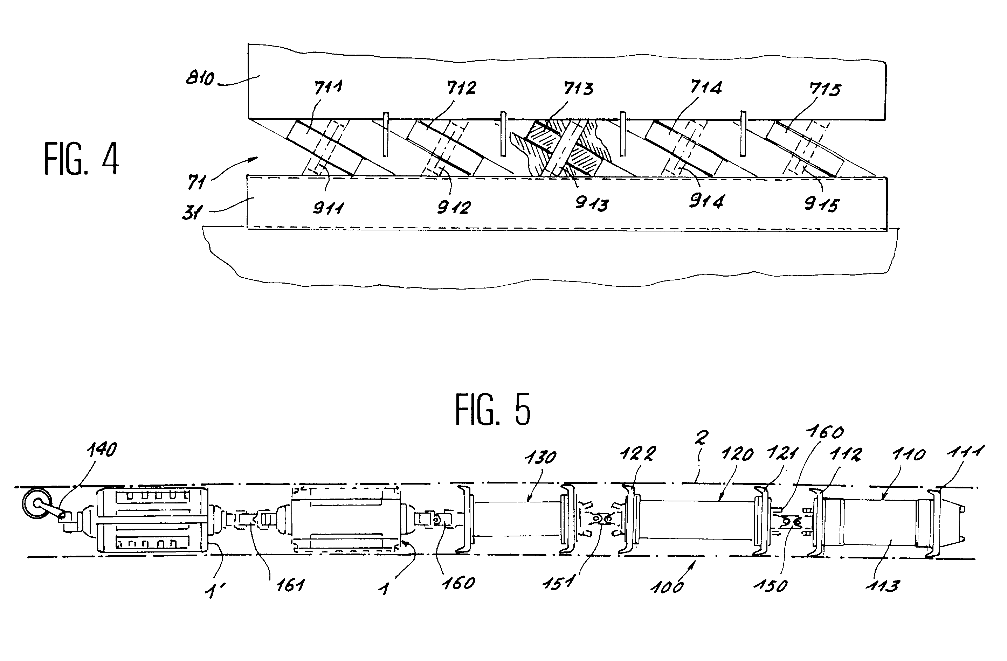

Chaque rangée de roues 71 est placée entre une pièce de support 810 et un bras d'une culasse 31, comme l'illustre la figure 4. Une rangée 71 comporte par exemple cinq roues 711-715 disposées longitudinalement et présentant des axes de rotation 911-915 parallèles inclinés par exemple d'un angle de 30 degrés par rapport à un axe diamétral. Le choix de cet angle d'orientation conditionne directement le pas de l'hélice décrite par l'ensemble de mesure et la longueur des barres de détection.

L'ensemble de mesure 2 comprend en outre à chacune de ses extrémités des équipements de liaison mécanique 3, 4 et de liaison électrique 41, 42 avec les autres ensembles voisins au sein du système de détection selon l'invention.

Il est à noter qu'à l'exception des culasses, tous les composants de l'ensemble de mesure doivent être réalisés dans des matériaux amagnétiques. En outre, les pièces situées à proximité immédiate des circulations de flux magnétique doivent de préférence être réalisés dans un matériau non conducteur de l'électricité, par exemple un matériau synthétique, afin d'éviter toute apparition de courant de Foucault lors de variations de flux de fuite dans ces pièces, ce qui pourrait éventuellement induire des perturbations dans les mesures.

Dans un exemple pratique de réalisation, une barre de détection peut comprendre 18 capteurs à effet Hall. A titre d'exemple non limitatif, le pas du déplacement hélicoïdal peut être d'environ 2 m, avec un angle de 30 degrés. Les barrettes de détecteurs de Hall peuvent être d'une longueur de 20 cm.

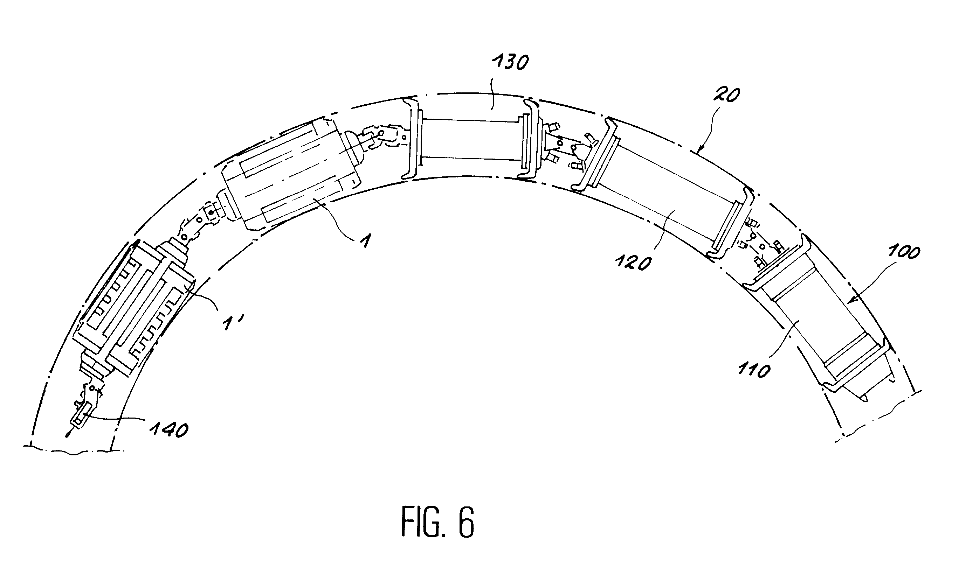

On va maintenant décrire un exemple de réalisation d'un système de détection selon l'invention, en référence aux figures 5 et 6. Un système 100 de détection de fissure selon l'invention peut comprendre, en référence à la figure 5, un premier ensemble d'entraînement 110 contenant des accumulateurs d'énergie électrique, un second ensemble d'entraînement 120 contenant l'électronique de mesure, un ensemble de contacts tournants 130, un premier et un second ensembles de mesure 1, 1', et un ensemble de comptage ou d'odométrie 140.

Les ensembles d'entraînement 110, 120 reliées entre eux par un dispositif de liaison mécanique 150 et un dispositif de liaison électrique 160 (partiellement représenté), sont pourvus de joints 111, 112; 121, 122 contribuant à l'avancement du système par pression sur ces joints du fluide circulant dans la canalisation 2. L'ensemble de contacts tournants, relié au second ensemble d'entraînement 120 par des dispositifs de liaison mécanique 151 et électrique, permet d'assurer des connexions électriques d'énergie et de signaux entre les ensembles d'entraînement qui ne tournent pas et les deux ensembles de mesure qui eux suivent une trajectoire hélicoïdale à l'intérieur de la canalisation et donc sont en rotation sur eux-mêmes. L'ensemble de contacts tournants 130 peut être réalisé à partir de techniques classiques mettant par exemple en ouvre des pistes conductrices et des balais glissant sur ces pistes. Les deux ensembles de mesure 1, 1' sont reliées entre eux et à l'ensemble de contacts tournants 130 par des dispositifs de liaison de type cardan 160, 161. L'ensemble de comptage 140 peut être réalisée sous la forme d'un disque maintenu en roulement sur la surface intérieure de la canalisation, ce disque étant par exemple percé de trous et associé à une cellule de comptage d'impulsions. Il est à noter que l'on peut avantageusement tirer partie de la détection des joints de soudure à la jonction entre deux portions de canalisation pour obtenir des références de position du système à l'intérieur de la canalisation et une localisation des éventuelles anomalies d'épaisseur détectées.

L'utilisation de deux ensembles de mesure adjacents permet d'assurer un balayage avec recouvrement de l'intégralité de la surface intérieure de la canalisation inspectée. On peut avantageusement prévoir de déphaser spatialement les deux ensembles de mesure l'un par rapport à l'autre afin d'assurer ce recouvrement.

On va maintenant décrire les caractéristiques essentielles du fonctionnement du système de détection selon l'invention et du procédé mis en ouvre dans ce système, notamment en référence aux figures 5 et 6. En premier lieu, le système de détection selon l'invention est introduit à l'intérieur d'une canalisation à inspecter au niveau d'une gare ou d'un noeud de dérivation. L'introduction du système s'effectue hors pression. Il est à noter que le système de détection selon l'invention est entièrement autonome: ses accumulateurs contenus dans le premier ensemble d'entraînement fournissent en énergie électrique l'ensemble des équipements électriques et électroniques. Par ailleurs, l'électronique embarquée dans le second ensemble d'entraînement comporte une unité d'enregistrement capable de stocker l'ensemble des meures effectuées au cours d'une inspection et les informations de localisation dans la canalisation.

Dès mise sous pression de la canalisation, le système de détection selon l'invention est entraîné par le fluide. Il est à noter que dans des portions de trajectoire sensiblement rectilignes (figure 5) ou à très grand rayon de courbure, ce sont essentiellement les roues de guidage des modules de guidage d'extrémité qui sont en contact de roulement sur la surface intérieure de la canalisation. En revanche, pour les très faibles rayons de courbure (figure 6), ce sont essentiellement les rangées de roues centrales qui sont actives dans la partie intérieure de la courbure, les roues d'extrémité n'étant alors plus en contact avec la surface intérieure de la canalisation.

Les ensembles de mesure suivent une trajectoire hélicoïdale qui permet aux barres de détection de Hall de balayer sur 360 degrés la surface intérieure de la canalisation, tout en présentant une composante axiale de déplacement. Du fait d'une structure magnétique localisée obtenue par la mise en ouvre de quatre culasses indépendantes, les flux magnétiques injectés à l'intérieur de la masse de la canalisation sont locaux et transversaux.

Les barres de détection Hall peuvent ainsi détecter des anomalies d'épaisseur orientées longitudinalement, ce que ne pouvait faire le système de détection à aimant longitudinal de l'art antérieur. Il est à noter qu'on peut fort bien constituer un système de détection comprenant, outre des ensembles de mesure rotatifs tels que ceux qui viennent d'être décrits pour la détection des fissures longitudinales et pour la détection des anomalies d'épaisseur, un ensemble de mesure à aimants longitudinaux pour la détection des fissures transversales, permettant ainsi d'obtenir une cartographie complète des signatures magnétiques d'une canalisation en acier ou en fonte. Le système de détection selon l'invention est normalement récupéré au niveau d'une autre gare ou d'un autre noeud de dérivation à l'issue d'un parcours déterminé à l'intérieur de la canalisation à inspecter. Les données enregistrées sont alors traitées pour fournir des signatures caractéristiques de l'état de la canalisation.

Bien sûr, l'invention n'est pas limitée aux exemples qui viennent d'être décrits et de nombreux aménagements peuvent être apportés à ces exemples sans sortir du cadre de l'invention. Ainsi, on peut concevoir bien d'autres agencements des ensembles de mesure, notamment avec un nombre différent de modules de mesure et un autre angle d'inclinaison des roues de guidage. Par ailleurs, le nombre d'ensembles d'entraînement n'est pas limité à celui du système qui vient d'être décrit. Ainsi, on peut prévoir un ensemble d'entraînement incluant par exemple l'électronique de mesure et des accumulateurs d'énergie. En outre, on peut envisager d'autres techniques d'odométrie que celle qui vient d'être décrite.

On peut, en particulier, placer les accumulateurs d'énergie et l'électronique de mesure à l'intérieur de l'ensemble de mesure tournant, ce qui évite l'utilisation de contacts tournants.

L'exemple particulier de réalisation a été décrit avec des détecteurs du type à effet Hall mais il est clair que des détecteurs de types différents peuvent être mis en oeuvre.

## Revendications

1. Système (100) pour détecter des fissures et des anomalies d'épaisseur dans une canalisation cylindrique (2) , insérable et déplaçable à l'intérieur de cette canalisation, ce système comprenant:
- des moyens (31-34) pour produire et injecter un flux magnétique transversal dans une portion de la canalisation,
- des moyens (81-84) pour mesurer des champs magnétiques locaux sur la surface intérieure de la canalisation (2),
- des moyens (120) pour traiter ces mesures, les stocker et les situer dans ladite canalisation,
- des moyens (110) pour entraîner ce système (100) par le flux de fluide circulant dans cette canalisation (2),
les moyens de production et de génération de flux (31-34) et les moyens de mesure (81-84) étant agencés au sein d'au moins un ensemble de mesure (1) de forme sensiblement cylindrique comprenant des moyens de guidage (5, 6, 71) pour imposer à cet ensemble de mesure (1) une trajectoire sensiblement hélicoïdale à l'intérieur de la canalisation (2), caractérisé en ce que l'ensemble de mesure (1) comprend une pluralité de circuits magnétiques (31- 34) disposés régulièrement à la périphérie dudit ensemble de mesure (1) et comprenant chacun une culasse (313, 323, 333, 343) en matériau ferromagnétique comprenant deux pôles dirigés vers la surface intérieure de la canalisation (2) et pourvus chacun d'aimants permanents (311, 312; 321, 322; 331, 332; 341, 342), ces aimants permanents étant agencés de sorte que deux pôles adjacents appartenant à deux circuits magnétiques distincts présentent une même polarité.

2. Système (100) selon la revendication 1, caractérisé en ce que l'ensemble de mesure (1) comprend en outre, au titre des moyens de mesure de champ magnétique, des ensembles de détecteurs (81-84) disposés entre les pôles (311, 312; 321, 322; 331, 332; 341, 342) de chaque culasse (313, 323, 333, 343).

3. Système (100) selon la revendication 2, caractérisé en ce que chaque ensemble de détecteurs (81-84) est intégré dans une pièce en matériau isolant disposée à la périphérie de l'ensemble de mesure de façon à être en contact ou à proximité immédiate de la surface intérieurs de la canalisation.

4. Système (100) selon la revendication 2 ou 3, caractérisé en ce que les détecteurs (81-84) sont du type à effet Hall.

5. Système (100) selon l'une quelconque des revendications précédentes, caractérisé en ce que les moyens de guidage comprennent des roues libres (711-715; 731-735) situées à la périphérie de l'ensemble de mesure et ayant chacune une direction de roulement prédéterminée pour assurer une trajectoire hélicoïdale de l'ensemble de mesure (1) dans la canalisation (2).

6. Système (100) selon la revendication 5, caractérisé en ce que les roues libres (711-715; 731-735) sont agencées en plusieurs rangées longitudinales (71, 72, 73) disposées sur la périphérie de l'ensemble de mesure (1).

7. Système (100) selon la revendication 6, caractérisé en ce que des rangées de roues (71, 73) sont situées entre les pôles respectifs (311, 312; 321, 322; 331, 332, 341, 342) de chaque circuit magnétique (313, 323, 333, 343).

8. Système (100) selon la revendication 7 et l'une des revendications 2, 3 ou 4, caractérisé en ce que les moyens de guidage comprennent en outre, pour chaque culasse (313, 323, 333, 343) une pièce (931) pour supporter deux rangées de roues (71, 71') disposées respectivement entre un pôle (311, 312) du circuit magnétique (31) et un ensemble de détecteurs (81).

9. Système (100) selon l'une des revendications 5 à 8, caractérisé en ce que l'ensemble de mesure (1) comprend en outre à chacune de ses extrémités un jeu (5, 6) de roues de guidage d'extrémité agencées pour contribuer à la trajectoire hélicoïdale de l'ensemble de mesure (1) dans une canalisation (2).

10. Système (100) selon l'une quelconque des revendications précédentes, constitué d'une suite de plusieurs ensembles reliés entre eux par des moyens de liaison, notamment au moins un ensemble d'entraînement (110, 120) contenant les moyens de traitement et d'enregistrement et au moins un ensemble de mesure (1, 1'), caractérise en ce qu'il comprend en outre un ensemble de contact tournant (130) disposé entre le(s) ensemble(s) de mesure (1, 1') et le(s) ensemble(s) d'entraînement (110, 120).

11. Système (100) selon la revendication 10, caractérisé en ce qu'il comprend au moins deux ensembles de mesure successifs (1, 1') de façon à balayer en recouvrement l'intégralité de la surface intérieure de la canalisation (2).

12. Système selon l'une des revendications 10 ou 11, caractérisé en ce qu'il comprend en outre un ensemble de mesure transversale comprenant un aimant permanent longitudinaux avec, à chacune de ses extrémités, des brosses magnétiques et des détecteurs magnétiques disposés à la périphérie dudit ensemble de mesure transversale.
